(19) Europäisches Patentamt / European Patent Office / Office européen des brevets

(11) **EP 3 499 630 B1**

(12) **EUROPÄISCHE PATENTSCHRIFT**

(45) Veröffentlichungstag und Bekanntmachung des Hinweises auf die Patenterteilung:
**11.10.2023  Patentblatt 2023/41**

(21) Anmeldenummer: **18209364.1**

(22) Anmeldetag: **30.11.2018**

(51) Internationale Patentklassifikation (IPC):
**H01M 10/0565** (2010.01)    **H01M 10/052** (2010.01)

(52) Gemeinsame Patentklassifikation (CPC):
**H01M 10/0565; H01M 10/052;** H01M 2300/0091

(54) **LITHIUMIONENLEITENDES VERBUNDMATERIAL, UMFASSEND WENIGSTENS EIN POLYMER UND LITHIUMIONENLEITENDE PARTIKEL, UND VERFAHREN ZUR HERSTELLUNG EINES LITHIUMIONENLEITERS AUS DEM VERBUNDMATERIAL**

LITHIUM ION CONDUCTING COMPOSITE MATERIAL, COMPRISING AT LEAST ONE POLYMER AND LITHIUM ION CONDUCTING PARTICLES, AND METHOD FOR PRODUCING A LITHIUM ION CONDUCTOR FROM THE COMPOSITE MATERIAL

MATÉRIAU COMPOSITE CONDUCTEUR D'IONS DE LITHIUM COMPRENANT AU MOINS UN POLYMÈRE ET UNE PARTICULE CONDUCTRICE D'IONS DE LITHIUM, ET PROCÉDÉ DE FABRICATION D'UN CONDUCTEUR D'IONS DE LITHIUM À PARTIR DU MATÉRIAU COMPOSITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.12.2017  DE 102017128719**

(43) Veröffentlichungstag der Anmeldung:
**19.06.2019  Patentblatt 2019/25**

(73) Patentinhaber: **SCHOTT AG**
**55122 Mainz (DE)**

(72) Erfinder:
• **SCHUHMACHER, Joerg**
**70806 Kornwestheim (DE)**
• **TREIS, Philipp**
**55127 Mainz (DE)**
• **DREWKE, Jochen**
**55128 Mainz (DE)**

• **SCHMITT, Hans-Joachim**
**55437 Ockenheim (DE)**
• **SAMSINGER, Rolf**
**65428 Rüsselsheim a.M. (DE)**
• **ROTERS, Andreas**
**55118 Mainz (DE)**
• **SCHNEIDER, Meike**
**65232 Taunusstein (DE)**
• **MENKE-BERG, Yvonne**
**65197 Wiesbaden (DE)**

(74) Vertreter: **Sawodny, Michael-Wolfgang**
**Dreiköniggasse 10**
**89073 Ulm (DE)**

(56) Entgegenhaltungen:
WO-A1-00/20345    DE-A1-102016 208 532
JP-B2- 3 062 203    US-A1- 2017 005 367
US-B1- 6 475 678

EP 3 499 630 B1

**Beschreibung**

Die Erfindung betrifft ein lithiumionenleitendes Verbundmaterial, umfassend wenigstens ein Polymer und lithiumionenleitende Partikel, und ein Verfahren zur Herstellung eines Lithiumionenleiters aus dem Verbundmaterial.

In den letzten Jahren haben Lithiumionen- und Lithiumbatterien, insbesondere aufgrund ihrer hohen Energiedichten, dem Fehlen von Memoryeffekten sowie dahingehend, dass diese unter sehr langsamen Spannungsabfall leiden, insbesondere für elektronische Geräte, aber auch im Bereich der Elektromobilität immer höhere Bedeutung erworben. Bei Lithiumionen- und Lithiumbatterien im Allgemeinen handelt es sich um eine Familie von wiederaufladbaren Batterietypen (auch als Sekundärbatterietypen bezeichnet), die für die oben genannten Gebiete als Stromspeichermedien verwendet werden.

Eine Lithiumionen- bzw. Lithiumbatterie besteht grundsätzlich aus drei Hauptbaueinheiten, nämlich der Anode (negative Elektrode), der Kathode (positive Elektrode) sowie dem zwischen den beiden Elektroden angeordneten, nichtwässrigen Elektrolyt, der die Wanderung der Lithiumionen im Betrieb (Laden oder Entladen) bewerkstelligt. Im Fall der Lithiumionenbatterien ist die Anode üblicherweise graphitbasiert, in die Lithiumionen beim Laden einlagert und beim Entladen von dieser abgegeben werden. Bei den Lithiumbatterien kommt dagegen elementares Lithium als Anode zum Einsatz.

Zurzeit werden in den kommerziell erhältlichen Lithiumionenbatterien hauptsächlich Elektrolyte verwendet, in denen ein Lithiumsalz in einem organischen Lösemittel gelöst ist. Diese Lithiumionenbatterien haben allerdings den Nachteil, dass diese bei Fehlbenutzungen oder extremen Belastungen sich selbst zerstören und im extremsten Fall dabei Feuer fangen können.

Zur Lösung dieser Probleme wurden in den letzten Jahren, insbesondere die sogenannten Lithiumfestkörperbatterien untersucht, in denen die organobasierte, flüssige Elektrolytmatrix durch einen noch immer lithiumleitfähigen Feststoff ersetzt ist. Dabei kann der Festkörperelektrolyt im Batteriesystem ganz allgemein an unterschiedlichen Stellen Verwendung finden: Einerseits ist der Einsatz des reinen Festkörperelektrolyten als Separator denkbar: Zwischen die Elektroden eingebracht, bewahrt er diese vor einem unerwünschten Kurzschluss und stellt dadurch die Funktionsfähigkeit des Gesamtsystems sicher. Dazu kann der Festkörperelektrolyt entweder als Schicht auf eine oder beide Elektroden aufgebracht oder als freistehende Membran in die Batterie integriert werden. Andererseits ist die Compoundierung mit den Elektrodenaktivmaterialien denkbar. In diesem Fall bewerkstelligt der Festkörperelektrolyt den Transport der relevanten Ladungsträger (Litihiumionen und Elektronen) zu den Elektrodenmaterialien und zu den Leitelektroden hin bzw. von diesen weg - je nachdem ob die Batterie gerade entladen oder geladen wird.

Prinzipiell kann es sich bei Festkörperelektrolyten um einen Polymerelektrolyten bzw. Polyelektrolyten handeln. Bei ersterem ist - ähnlich wie bei den Flüssigelektrolyten - ein lithiumbasiertes Leitsalz in einer festen Polymermatrix (häufig wird hierfür Polyethylenoxid eingesetzt) gelöst. Bei zweiterem handelt es sich um polyfunktionelle Lithiumsalze eines Polymers. Beide, Polymer- wie Polyelektrolyten, weisen - ähnlich wie die flüssigbasierten Elektrolyten - in der Regel eine unzureichende chemische und elektrochemische Stabilität gegenüber elementarem Lithium auf und sind somit für den Einsatz in Lithiumbatterien eher ungeeignet. Alternativ ist aber auch die Verwendung eines rein anorganischen Festkörperionenleiters als Ersatz für die bislang verwendeten organobasierten Flüssigelektrolyten denkbar. Als im Blick auf ihre Lithiumionenleitfähigkeit besonders vielversprechend werden dabei oxid- (z. B. lithiumleitende Mischoxide mit granatartiger Struktur), phosphat- und sulfidbasierte, lithiumionenleitende Materialien diskutiert. Gewisse Varianten hiervon weisen gegenüber elementarem Lithium eine hinreichende chemische und elektrochemische Stabilität auf. Sie sind daher für die Verwendung in Lithiumbatterien geeignet. Für andere Vertreter aus der Klasse der rein anorganischen

Festkörperionenleiter gilt dies jedoch nicht. In jedem Fall ist die Einsatzfähigkeit eines entsprechenden Materials als Festkörperelektrolyt in Lithiumbatterien daher im Einzelfall nochmals gesondert zu prüfen. Eine dritte Variante für einen lithiumleitenden Feststoff stellen die sogenannten Hybridelektrolyten dar: Hierbei handelt es sich um ein Kompositmaterial, bei dem Partikel aus einem anorganischen, lithiumionenleitenden Material in eine lithiumleitende Polymermatrix, bestehend aus einem Polymer- oder Polyelektrolyten, eingearbeitet sind. Bestimmte Hybridelektrolytvarianten zeigen ebenfalls eine hinreichende chemische und elektrochemische Stabilität gegenüber elementarem Lithium und besitzen somit ebenfalls das Potenzial, in Lithiumbatterien Verwendung zu finden.

Unter den rein anorganischen, lithiumionenleitenden Festelektrolyten werden die sulfidischen Zusammensetzungen Li-S-P und $Li_2S$-$P_2S_5$-$P_2O_5$ teilweise durch Vermahlen der Edukte unter Schutzgas und anschließende Temperaturbehandlung (ebenfalls in der Regel unter Schutzgas) hergestellt. Die Herstellung von Li-P-S Glaskeramiken wird in den Schriften US 20050107239 A1, US 2009159839 A, JP 2008120666 A beschrieben. $Li_2S$-$P_2S_5$- $P_2O_5$ kann, wie von A. Hayashi et al., Journal of Non-Crystalline Solids 355 (2009) 1919-1923, dargestellt, sowohl über einen Mahlvorgang als auch über die Schmelze hergestellt werden. Auch Glaskeramiken aus dem System $Li_2S$-$B_2S_3$-$Li_4SiO_4$ können über die Schmelzroute und anschließendes Abschrecken hergestellt werden, allerdings sind auch diese Prozessschritte unter Luftabschluss durchzuführen (siehe US 2009011339 A und Y. Seino et al., Solid State Ionics 177 (2006) 2601-2603). Die erreichbaren Lithiumionenleitfähigkeiten liegen bei $2 \times 10^{-4}$ bis $6 \times 10^{-3}$ S/cm bei Raumtemperatur. Zu beachten ist bei den sulfidischen, lithiumionenleitenden Festelektrolyten, dass die Herstellung unter Schutzgas und die teilweise aufwändigen Mahlungen deren Produktion verteuern können. Zudem müssen häufig auch Handhabung und Lagerung unter Schutzgas oder zumindest in wasserfreier Umgebung erfolgen, was für die Herstellung der Lithiumbatterien unter Umständen einen Nachteil bedeuten kann.

Die auf oxidischen Systemen basierenden Festkörperlithiumionenleiter zeichnen sich im Gegensatz dazu durch einfachere und damit günstigere Herstellung und eine höhere chemische Stabilität aus. Bekannt sind hauptsächlich phosphatbasierte Zusammensetzungen mit Kristallphasen, die eine NASICON (Sodium Super-Ionic Conductor) ähnliche Kristallstruktur haben. Üblicherweise handelt es sich hierbei um Glaskeramiken, wobei zunächst ein Ausgangsglas geschmolzen und heißgeformt (z.B. gegossen) wird. Das Ausgangsglas wird in einem zweiten Schritt entweder direkt ("Bulk-Glaskeramik") oder als Pulver ("Sinterglaskeramik") keramisiert. Bei der Keramisierung kann durch eine entsprechend gewählte Temperatur-Zeit-Führung eine gesteuerte Kristallisation erfolgen, die die Einstellung eines für die Lithiumionenleitfähigkeit optimierten Gefüges der Glaskeramik erlaubt. Dadurch kann eine Verbesserung der Leitfähigkeit in der Größenordnung von mehr als einem Faktor 10 erreicht werden. Die Schrift US 20030205467 A1 beschreibt die Herstellung von Glaskeramiken aus $P_2O_5$, $TiO_2$, $SiO_2$, $M_2O_3$ (M = Al oder Ga) und $Li_2O$ mit der Hauptkristallphase $Li_{(1+x)}(Al, Ga)_xTi_{(2-x)}(PO_4)_3$ ($0 < x \leq 0,8$). Nach der Kristallisation wurde eine Ionenleitfähigkeit von 0,6 bis $1,5 \times 10^{-3}$ S/cm erreicht. Die Ausgangsgläser sind sehr kristallisationsanfällig und müssen auf einer Metallplatte abgeschreckt werden, um unkontrollierte Kristallisation zu vermeiden. Dies limitiert die Möglichkeiten der Formgebung und der Gefügeeinstellung in der Glaskeramik.

In den Schriften US 6,030,909 und US 6,485,622 werden zusätzlich $GeO_2$ und $ZrO_2$ in die Glaskeramik eingeführt. $GeO_2$ vergrößert den Glasbildungsbereich und verringert die Kristallisationsneigung. In der Praxis ist dieser positive Effekt jedoch durch den hohen Rohstoffpreis des Germaniums limitiert. $ZrO_2$ führt dagegen zu einer Verstärkung der Kristallisation. Auch die in diesen Schriften genannten Ausgangsgläser neigen zu unkontrollierter Kristallisation und müssen in der Regel abgeschreckt werden, um ein geeignetes Ausgangsglas zu erhalten.

Xu et al. beschreiben in Electrochem. Commun., 6 (2004) 1233-1237, bzw. in Materials Letters, 58 (2004), 3428-3431, $Li_2O-Cr_2O_3-P_2O_5$-Glaskeramiken, die ebenfalls hohe Leitfähigkeiten von $5,7 \times 10^{-4}$ bis $6,8 \times 10^{-4}$ S/cm aufweisen. Auch diese Ausgangsgläser müssen jedoch wegen starker Kristallisationsneigung abgeschreckt werden.

Beschrieben werden auch Glaskeramiken, die $Fe_2O_3$ enthalten (K. Nagamine et al., Solid State Ionics, 179 (2008) 508-515). Hier wurden Ionenleitfähigkeiten von $3 \times 10^{-6}$ S/cm gefunden. Allerdings führt der Einsatz von Eisen (oder anderen polyvalenten Elementen) häufig zum Auftritt elektronischer Leitfähigkeit, die in einem Festkörperelektrolyten vermieden werden muss. Diese Glaskeramik wird gemäß JP 2008047412 A daher bevorzugt als Kathodenmaterial eingesetzt, da hier eine elektronische Leitfähigkeit erwünscht ist, um die Kontaktierung der Kathode zu erleichtern.

In der US 2014/0057162 A1 werden lithiumionenleitende phosphatbasierte Glaskeramiken beschrieben, die eine Ionenleitfähigkeit von mindestens $5 \times 10^{-7}$ S/cm aufweisen und deren Ausgangsgläser eine ausreichende Kristallisationsstabilität ausweisen, so dass sie aus der Schmelze durch Guss ohne die Notwendigkeit zum Abschrecken hergestellt werden können. Zugleich weisen sowohl die Glaskeramiken wie auch die Ausgangsgläser eine ausreichende chemische Stabilität an Luft auf, so dass eine Lagerung möglich ist. Dies wird dadurch ermöglicht, dass die entsprechenden phosphatbasierten Glaskeramiken $Ta_2O_5$ und/oder $Nb_2O_5$ enthalten. $Ta_2O_5$ und $Nb_2O_5$ verbessern die Kristallisationsstabilität des Glases und können, da sie ebenfalls in die Kristallphase eingebaut werden können, die Ionenleitfähigkeit positiv beeinflussen, indem der Kristallphasenanteil steigt.

Eine Substanzklasse, die unter den oxidbasierten, anorganischen Festkörperionenleitern aufgrund ihrer hohen Lithiumionenleitfähigkeit von besonderem Interesse ist, sind lithiumhaltige Mischoxide mit granatartiger Struktur, wie in der Schrift DE 102007030604 A1 beschrieben. Eine besonders gute Leitfähigkeit weist in diesem Zusammenhang die Materialklasse mit Zirkon und Lanthan auf, die in ihrer einfachsten Form die Formel $Li_7La_3Zr_2O_{12}$ hat. Letztere Verbindung oder davon abgeleitete Verbindungen werden häufig auch kurz nur als LLZO bezeichnet. Dieser Granat tritt in zwei Modifikationen, einer tetragonalen und einer kubischen Modifikation, auf. Da insbesondere die kubische Modifikation von LLZO eine hohe Lithiumionenleitfähigkeit aufweist, ist die kubische Modifikation von LLZO für Lithiumfestkörperbatterien von besonderem Interesse. Weitere Untersuchungen an LLZO haben gezeigt, dass die Bildung der kubischen Modifikation von LLZO insbesondere unter Zugabe weiterer Metalle zur Dotierung, wie beispielsweise Aluminium, stabilisiert werden kann. Im Rahmen der vorliegenden Anmeldung werden Lithiumlanthanzirkonoxide, undotiert oder dotiert, oder davon abgeleitete Verbindungen allgemein als LLZO bezeichnet. LLZO haben sich in der Vergangenheit als chemisch und elektrochemisch stabil gegenüber dem in Lithiumbatterien als Anode zum Einsatz kommenden, elementaren Lithium erwiesen und besitzen damit ein großes Potenzial für die Verwendung als Elektrolyt in entsprechenden Systemen.

Für die Herstellung von LLZO werden in der Literatur mehrere Verfahren genannt: So sind zum einen sogenannte Festphasenverfahren zur Herstellung von LLZO bekannt, wie diese z.B. in der US 2010/047696 A1 oder in der US 2010/0203383 A1 beschrieben sind. In dem in dem letztgenannten Dokument beschriebenen Verfahren werden die teilweise bei Temperaturen bis 900°C vorgetrockneten Ausgangsstoffe zwölf Stunden in einer Kugelmühle vermahlen, danach zwölf Stunden bei Temperaturen zwischen 900 und 1125°C erhitzt und das erhaltene Produkt erneut in einer Kugelmühle vermahlen. Im Anschluss daran wird das erhaltene Pulver isostatisch verpresst und bei Temperaturen im Bereich von 1230°C 36 Stunden erneut calciniert. Alternativ zu den Festphasenverfahren wurde versucht unter Verwendung des Sol-Gel-Verfahrens Prekursoren herzustellen, die dann in die gewünschten kristallinen Mischoxide mit Granatstruktur weiterverarbeitet werden können. Ein solches Verfahren, das manchmal auch als Pechini-Verfahren beschrieben wird, ist z.B. in Y. Shimonishi et al, Solid State Ionics 183 (2011) 48-53 beschrieben. Hierbei werden Lithium, Lanthan und Zirkon in Form der Nitrate eingesetzt und in einer Mischung aus Wasser, Zitronensäure und Ethylenglykol zusammen erhitzt, wobei sich ein schwarzer Feststoff bildet, der dann noch einmal bei 350 °C für fünf Stunden wärmebehandelt werden muss, bevor ein pulverförmiges Zwischenprodukt erhalten wird, das dann zum gewünschten Endprodukt weiterverarbeitet werden kann. In der DE 102013101145 A1 und DE 102013224045 A1 wird die Herstellung von kubisch oder tetragonal kristallisierenden LLZO über den Sol-Gel-Prozess beschrieben, wobei einmal von einem alkohol- und einmal von einem wasserbasierten Sol ausgegangen wird. Aus der US 2011/0053001 A1 ist ein weiteres Sol-Gel-Verfahren zur Herstellung von amorphem LLZO bekannt.

Die DE 102014116378 A1 offenbart die Herstellung von LLZO in Form einer Glaskeramik. Unter einer Glaskeramik wird - wie oben bei den phosphatbasierten Festkörperlithiumionenleitern beschrieben - ein Material verstanden, das schmelztechnologisch hergestellt ist und nachfolgend in eine Glaskeramik überführt wurde. Die Glaskeramik enthält einen amorphen Anteil von mindestens 5 Gew.-%. Durch den amorphen Anteil wird die Leitfähigkeit positiv beeinflusst. Allerdings sollte der Anteil der amorphen Phase nicht größer als 40 Gew.-%, bevorzugt kleiner gleich 30 Gew.-% sein, da sonst die Gesamtleitfähigkeit verringert wird. Ein weiterer Vorteil der Herstellung als Glaskeramik liegt in der Möglichkeit, das Gefüge durch eine gesteuerte Kristallisation direkt zu beeinflussen, wodurch die Leitfähigkeit weiter positiv beeinflusst werden kann. Die in der DE 102014116378 A1 beschriebene Glaskeramik weist vorzugsweise eine Ionenleitfähigkeit von mindestens $5 \times 10^{-5}$ S/cm, bevorzugt mindestens $1 \times 10^{-4}$ S/cm auf. Teilweise kann die Ionenleitfähigkeit sogar noch deutlich höher liegen.

Aus der JP 3 06 22 03 B2 ist ein Elektrolyt für eine Lithiumbatterie bekannt geworden, der PEO als Polymer umfasst und als sphärische, anorganische lithiumionenleitende Partikel NASICON oder LISICON. Die Größe dieser Partikel liegt im Bereich 0,1 µm bis 50 µm. Die Menge der sphärischen Partikel beträgt bis zu 40 Vol-%. Zusätzlich umfasst der Elektrolyt ein Lithiumsalz.

Die US 6 475 678 B1 zeigt eine nicht-wässrige Elektrolyt-Batterie, bei der ionenleitende Polymerpartikel zwischen einer positiven und negativen Elektrode angeordnet sind. Bei dem Elektrolyten handelt es sich um ein Lithiumsalz. Des Weiteren umfassen die Polymerpartikel eine Partikelgröße im Bereich 0,8 µm und mehr und der Anteil an lithiumionenleitenden Partikeln beträgt zwischen 10 % und 90 %.

Die US 2017/005 367 A1 beschreibt ein Verfahren zum Sintern eines lithiumleitenden Verbundmaterials, wobei eine Verdichtung mittels Druck und Temperatur beschrieben ist.

Aufgabe der vorliegenden Erfindung ist es, ein lithiumionenleitendes Verbundmaterial umfassend wenigstens ein Polymer und lithiumionenleitende Partikel, bereitzustellen, wobei das Verbundmaterial einen wesentlichen höheren Partikelfüllgrad als bislang erreichbar aufweisen soll. Es soll einfacher und wirtschaftlicher herstellbar sein. Weiterhin ist es Aufgabe der Erfindung ein Verfahren zur Herstellung eines Lithiumionenleiters aus dem Verbundmaterial zu finden.

Gelöst wird diese Aufgabe durch ein lithiumionenleitendes Verbundmaterial gemäß Anspruch 1 und ein Verfahren gemäß Anspruch 4, Weiterbildung der Erfindung sind Gegenstand von Unteransprüchen.

Das lithiumionenleitende Verbundmaterial umfasst wenigstens ein Polymer und lithiumionenleitende Partikel, wobei die Partikel eine Sphärizität Ψ von wenigstens 0,7 aufweisen,

und

> das Verbundmaterial wenigstens 20 Vol.-% der Partikel bei einem Polydispersitätsindex PI der Partikelgrößenverteilung von < 0,7 enthält,
> oder
> dass das Verbundmaterial wenigstens 30 Vol.-% der Partikel bei einem Polydispersitätsindex PI der Partikelgrößenverteilung im Bereich von 0,7 bis < 1,2 enthält,
> oder
> dass das Verbundmaterial wenigstens 40 Vol-% der Partikel bei einem Polydispersitätsindex PI der Partikelgrößenverteilung von > 1,2 enthält.

Dabei ist die Sphärizität Ψ eine Kenngröße dafür, wie kugelförmig der Partikel ist. Nach der Definition nach H. Wadell berechnet sich die Sphärizität Ψ eines Partikels als das Verhältnis der Oberfläche einer Kugel gleichen Volumens zur Oberfläche des Partikels:

$$\Psi = \frac{\sqrt[3]{36\pi V_p^2}}{A_p}$$

wobei $V_p$ das Volumen des Partikels und $A_p$ seine Oberfläche bezeichnet.

Typische Sphärizitätswerte $\Psi$ für verschiedene Partikeltypen sind:

| | |
|---|---|
| Kugel: | 1,0 |
| Tropfen, Blase, rundes Korn: | 0,7 - 1,0 |
| Eckiges Korn: | 0,45 - 0,6 |
| Nadelförmiges Partikel: | 0,2 - 0,45 |
| Plättchenförmiges Partikel: | 0,06 - 0,16 |
| Partikel mit stark zerklüfteter Oberfläche: | $10^{-8}$ - $10^{-4}$ |

Hohe Sphärizitäten $\Psi$ im Sinne der hier vorliegenden Erfindung werden erreicht, wenn $\Psi$ ein Wert von wenigstens 0,7 aufweist.

Unter dem Polydispersitätsindex PI der Partikelgrößenverteilung im Sinne der Erfindung wird der dekadische Logarithmus des Quotienten aus $d_{90}$- und $d_{10}$-Wert der Verteilung verstanden:

$$PI = \log (d_{90}/d_{10})$$

In der Regel lassen sich in Kompositen und Kompositvorstufen höhere Partikelfüllgrade bei breiteren Partikelgrößenverteilungen erzielen, d.h. wenn der Polydispersitätsindex PI größere Werte annimmt.

Definition d-Wert, insbesondere $d_{90}$-Wert und $d_{10}$-Wert zur Bestimmung von PI:

Die Partikel eines Pulvers werden generell unabhängig von ihrer Sphärizität $\Psi$ mit Hilfe eines zu messenden volumenäquivalenten Kugeldurchmessers unterschieden und entsprechend ihrer Größe in ausgewählte Klassen eingeordnet. Zur Darstellung einer Partikelgrößenverteilung werden die Mengenanteile bestimmt, mit denen die jeweiligen Partikelklassen im Pulver vorhanden sind.

Dabei werden unterschiedliche Mengenarten verwendet. Werden die Partikel gezählt, so ist die Mengenart die Anzahl. Bei Wägungen hingegen ist es die Masse bzw. bei homogener Dichte $\rho$ das Volumen. Weitere leiten sich aus Längen, Projektions- und Oberflächen her.

Man unterscheidet:

| Mengenart: | Index r: |
|---|---|
| Anzahl | 0 |
| Länge | 1 |
| Fläche | 2 |
| Volumen (Masse) | 3 |

Ein gängiges Mengenmaß zur Beschreibung der Partikelgrößenverteilung in Pulvern bildet die Summenverteilung $Q_r$. Der Index $r$ bezeichnet die Mengenart gemäß obiger Tabelle.

Die Summenverteilungsfunktion $Q_r(d)$ gibt die normierte Menge aller Partikel mit einem Äquivalentdurchmesser kleiner gleich d an. Im Folgenden werden Summenverteilungen der beiden gebräuchlichsten Mengenarten explizit definiert:

- Partikelzahl (r = 0)
  Sei $N_i$ die Zahl aller untersuchten Partikel mit einem Durchmesser d kleiner oder gleich dem betrachteten Durchmesser $d_i$ sowie N die Gesamtzahl aller untersuchten Partikel. Dann ist

$$Q_0(d_i) = \frac{N_i}{N}$$

- Partikelmasse (r = 3)
  Sei $m_i$ die Masse aller untersuchten Partikel mit einem Durchmesser d kleiner oder gleich dem betrachteten Durchmesser $d_i$ sowie m die Gesamtmasse aller untersuchten Partikel. Dann ist

$$Q_3(d_i) = \frac{m_i}{m}$$

Unter $d_i$-Werten i. S. der Erfindung werden Äquivalentdurchmesserwerte verstanden, bei denen die $Q_3(d_i)$-Summenverteilungsfunktion die folgenden Werte annimmt:

$d_{10}$: $Q_3(d_{10})$ = 10%, d. h. 10 Gew.-% der Partikeln weisen einen Durchmesser kleiner als oder gleich $d_{10}$ auf.
$d_{50}$: $Q_3(d_{50})$ = 50%, d. h. 50 Gew.-% der Partikeln weisen einen Durchmesser kleiner als oder gleich $d_{50}$ auf.
$d_{90}$: $Q_3(d_{90})$ = 90%, d. h. 90 Gew.-% der Partikeln weisen einen Durchmesser kleiner als oder gleich $d_{90}$ auf.
$d_{99}$: $Q_3(d_{99})$ = 99%, d. h. 99 Gew.-% der Partikeln weisen einen Durchmesser kleiner als oder gleich $d_{99}$ auf.
$d_{100}$: $Q_3(d_{100})$ = 100%, d. h. 100 Gew.-% der Partikeln weisen einen Durchmesser kleiner als oder gleich $d_{100}$ auf.

Der Begriff Polydispersitätsindex im Sinne dieser Anmeldung kann synonym zum Begriff Polydispersionsindex verstanden werden.

Das erfindungsgemäße Verbundmaterial kann a) in einer Ausführungsform direkt als Lithiumionenleiter verwendet werden oder b) in einer weiteren Ausführungsform als Zwischenprodukt zur Weiterverarbeitung zu einem Lithiumionenleiter verwendet werden.

Überraschenderweise hat sich gezeigt, dass mit Partikeln, die eine Sphärizität $\Psi$ von wenigstens 0,7 aufweisen, ein wesentlicher höherer Partikelfüllgrad erzielt werden kann. So sind erfindungsgemäße Verbundmaterialien zugänglich, die wenigstens 20 Vol.-% der Partikeln enthalten, wenn der Polydispersitätsindex PI der Partikelgrößenverteilung einen Wert von < 0,7 aufweist, oder die wenigstens 30 Vol.-% der Partikeln enthalten, wenn der Polydispersitätsindex PI der Partikelgrößenverteilung einen Wert von $0,7 \leq PI < 1,2$ aufweist, oder die wenigstens 40 Vol-% der Partikel enthalten, wenn der Polydispersitätsindex PI einen Wert von $\geq 1,2$ aufweist.

In einer Ausgestaltung weisen die Partikel eine Sphärizität $\Psi$ von wenigstens 0,8 und besonders bevorzugt von wenigstens 0,9 auf.

In einer weiteren Ausgestaltungenthält das Verbundmaterial bevorzugt wenigstens 25 Vol.-% der Partikeln und besonders bevorzugt wenigstens 30 Vol.-% der Partikeln, wenn der Polydispersitätsindex PI der Partikelgrößenverteilung einen Wert von < 0,7 aufweist, bevorzugt wenigstens 35 Vol.-% der Partikeln und besonders bevorzugt wenigstens 40 Vol.-% der Partikeln, wenn der Polydispersitätsindex PI der Partikelgrößenverteilung einen Wert von $0,7 \leq PI < 1,2$ aufweist, oder bevorzugt 45 Vol-% der Partikel und besonders bevorzugt wenigstens 50 Vol.-% der Partikel, wenn der Polydispersitätsindex PI der Partikelgrößenverteilung einen Wert von $\geq 1,2$ aufweist.

Erfindungsgemäß umfasst das Polymer wenigstens eine der folgenden Verbindungen:

- Polyethylenoxid,
- Derivate von Polyethylenoxid,
- Polyvinylbutyral.

Auch die nicht beanspruchte Verwendung folgender Polymere ist denkbar: Polyacrylnitril, Polyester, Polypropylenoxid, Ethylenoxid/Propylenoxid Copolymer, Polyethylenoxid vernetzt mit trifunktionalem Urethan, Poly (bis(methoxy-ethoxy-ethoxid))-phosphazen (MEEP), triol-artigem Polyethylenoxid vernetzt mit difunktionalem Urethan, Poly((oligo)oxethylen) methacrylat-co-alkalimetall-methacrylat, Polymethylmethacrylat (PMMA), Polymethylacrylonitril (PMAN), Polysiloxane sowie deren Copolymere und Derivate, Polyvinylidenfluorid oder Polyvinylidenchlorid sowie deren Copolymere und Derivate, Poly(chlorotrifluoro-ethylen), Poly(ethylen-chlorotrifluoro-ethylen), Poly(fluoriniertes ethylen-propylen), acrylat-basierte Polymere, deren kondensierte oder vernetzte Kombinationen, und/oder deren physikalische Mischungen.

Das Polymer kann wenigstens eine lithiumionenleitende Verbindung enthalten, insbesondere Lithiumbistrifluoromethanesulfonimidat als lithiumionenleitende Verbindung.

Als weitere, verwendbare Leitsalze kommen in Frage: $LiAsF_6$, $LiClO_4$, $LiSbF_6$, $LiPtCl_6$, $LiAlCl_4$, $LiGaCl_4$, LiSCN, $LiAlO_4$, $LiCF_3CF_2SO_3$, $Li(CF_3)SO_3$ (LiTf), $LiC(SO_2CF_3)_3$, phosphatbasierten Lithiumsalze vorzugsweise $LiPF_6$, $LiPF_3(CF_3)_3$ (LiFAP) und $LiPF_4(C_2O_4)$ (LiTFOB), boratbasierte Lithiumsalze vorzugsweise $LiBF_4$, $LiB(C_2O_4)_2$ (LiBOB), $LiBF_2(C_2O_4)$ (LiDFOB), $LiB(C_2O_4)(C_3O_4)$ (LiMOB), $Li(C_2F_5BF_3)$ (LiFAB) und $Li_2B_{12}F_{12}$ (LiDFB) und/oder Lithium-Salze von Sulfonylimiden, vorzugsweise $LiN(FSO_2)_2$ (LiFSI), $LiN(SO_2CF_3)_2$ (LiTFSI) und/oder $LiN(SO_2C_2F_5)_2$ (LiBETI).

Neben dem genannten Polymerelektrolyten kann alternativ auch ein Polyelektrolyt zum Einsatz kommen. Hierbei handelt es sich um Polymere, z. B. Polystyrolsulfonat (PSS), das $Li^+$ als Gegenion trägt oder polymerisierte ionische Flüssigkeiten auf Imidazolium-, Pyridinium-, Phosphonium- oder Guanidiniumbasis, die eine diskrete Anzahl an chemisch gebundenen, ionischen Gruppen tragen und aus diesem Grund intrinsisch lithiumionenleitfähig sind.

Die lithiumionenleitenden Partikel bestehen aus wenigstens einer lithiumionenleitenden Verbindung, insbesondere aus wenigstens folgenden lithiumionenleitenden Verbindungen:

- Lithiumlanthanzirkonat (LLZO),
- Lithiumaluminiumtitanphosphat (LATP)

Denkbar, aber nicht beansprucht sind auch nachfolgende lithiumleitenden Verbindungen:

- Verbindungen mit granatartiger Kristallstruktur,

  insbesondere aus einem Material mit einer granatartigen Kristallstruktur mit der Summenformel $Li_{7+x-y} M_x^{II}$ $M_{3-x}^{III} M_{2-y}^{IV} M_y^{V} O_{12}$ wobei
  M" ein zweiwertiges Kation,
  $M^{III}$ ein dreiwertiges Kation,
  $M^{IV}$ ein vierwertiges Kation,
  $M^{V}$ ein fünfwertiges Kation darstellt, wobei
  vorzugsweise $0 \leq x < 3$, weiter bevorzugt $0 \leq x \leq 2$, $0 \leq y < 2$, und besonders bevorzugt $0 \leq y \leq 1$
  oder davon abgeleiteten Verbindungen, insbesondere aus mit Al, Nb oder Ta dotierten Verbindungen,

- Verbindungen mit zu NaSICon isostruktureller Kristallstruktur, insbesondere mit der Summenformel $Li_{1+x-y}M^{5+}_{y}M^{3+}_{x}M4^{+}_{2-x-y}(PO_4)_3$, wobei x und y im Bereich von 0 bis 1 liegen und (1+x-y)>1 ist und M ein Kation der Wertigkeit +3, +4 oder +5 ist oder davon abgeleiteten Verbindungen.

Die Partikel weisen bevorzugt einen mittleren Partikeldurchmesser im Bereich von 0,02 $\mu$m bis 100 $\mu$m auf. Besonders bevorzugt in den beiden Bereichen 0,2 $\mu$m bis 2 $\mu$m und 5 $\mu$m bis 70 $\mu$m. Besonders bevorzugt in einem der beiden Bereiche 0,2 $\mu$m bis 2 $\mu$m oder 5 $\mu$m bis 70 $\mu$m.

In einer weiteren bevorzugten Ausführungsform ist bei dem lithiumionenleitenden Verbundmaterial der Grenzflächenwiderstand für die Lithiumionenleitfähigkeit zwischen dem Polymer und den Partikeln aufgrund einer Oberflächenveränderung der Partikel verringert und somit die Lithiumionenleitfähigkeit größer als bei einem vergleichbaren Verbundmaterial, bei dem der Grenzflächenwiderstand zwischen dem Polymer und den Partikeln nicht verringert ist.

Bevorzugt sind die Partikel mittels wenigstens einem der folgenden Verfahren hergestellt:

- Sprühkalzinierung (im Besonderen unter Verwendung der Pulsationsreaktortechnologie)
- Filamentierung aus einer Salzschmelze,
- Vertropfung,
- Glaskugelherstellung.

Unabhängig von der Frage, ob die rein anorganischen Festkörperlithiumionen leiter oxid-, phosphat- oder sulfidbasiert sind, ist allen zu deren Herstellung bislang im Stand der Technik beschriebenen Verfahren der Umstand gemein, dass das im jeweiligen Prozess anfallende lithiumionenleitende Material entweder monolithisch oder doch zumindest in undefiniert grobkörniger Struktur anfällt und durch weitere Zerkleinerungsschritte, in der Regel Feinmahlprozesse, in eine

endgültige Darreichungsform als Pulver mit definierter Partikelgröße und Partikelgrößenverteilung gebracht werden muss. Häufig liegt die zu erreichende Partikelgröße im $\mu$m- oder sub-pm-Bereich. Erst hierdurch wird eine weitere Prozessierung möglich. Hierbei ist im Besonderen einerseits die Einarbeitung in ein Polymer, Polymerelektrolyten oder Polyelektrolyten zur finalen Darstellung eines Hybridelektrolyten zu nennen. Andererseits handelt es sich hierbei um das Verpressen oder um die Einarbeitung in einen keramischen Schlicker und dessen weitere Verarbeitung in einem Formgebungsschritt (z. B. Foliengießen) unter Bildung eines keramischen Grünkörpers, der durch Sintern eine keramische Komponente überführt wird, die letztlich rein aus dem anorganischen Festkörperionenleiter besteht.

Über Zerkleinerungsprozesse, wie z. B. besagte Feinmahlprozesse, ist die Darstellung sphärischer Pulverpartikeln praktisch nicht möglich. Vielmehr werden hierbei scherbenförmige, mit Ecken und Kanten versehene Partikeln gebildet. Diese weisen demnach eine Sphärizität von deutlich kleiner als 0,7 auf.

Nicht-sphärische Partikeln ein und desselben Materials lassen sich in vielen Anwendungen deutlich schlechter verarbeiten als ihre sphärischen Pendants - gleiche Partikelgröße und Partikelgrößenverteilung vorausgesetzt. Insbesondere bei der Einarbeitung in thermoplastische (wie z. B. bei der Herstellung von Hybrid-elektrolyten der Fall) und flüssige Matrizes (relevant z. B. bei der Herstellung von keramischen Schlickern) macht sich dieser Umstand bemerkbar: Bei gleichen Volumenfüllgraden ist die Viskosität der partikelgefüllten Formulierung im Fall der Verwendung von nicht-sphärischen Partikeln signifikant höher als bei der Verwendung von sphärischen Partikeln aus dem gleichen Material, wenn diese eine vergleichbare Partikelgröße bzw. Partikelgrößenverteilung besitzen.

Umgekehrt lassen sich entsprechende Formulierungen im Fall der sphärischen Variante mit deutlich höheren Füllgraden versehen als im Fall der nicht-sphärischen Ausführungsform. Dies ist auf den Umstand zurückzuführen, dass die innere Reibung in mit nicht-sphärischen Partikeln gefüllten Formulierungen dadurch erhöht ist, dass die Partikeln zum gegenseitigen Verhaken neigen, wenn sie sich infolge der Einwirkung von äußeren Scherkräften innerhalb der Formulierung aneinander vorbei bewegen. Im Fall sphärischer Partikeln vermögen diese hingegen besser aneinander vorbei zu gleiten.

Der Umstand, dass sich bei Verwendung von sphärischen Partikeln in hiermit gefüllten Formulierungen unter vergleichbaren Bedingungen deutlich höhere Volumenfüllgrade erzielen lassen, ist in der Praxis von großer Relevanz: So lassen sich beispielsweise in Hybridelektrolyten durch vermehrten Einbau des aus sphärischen Partikeln bestehenden anorganischen Festkörperionenleiters deutlich bessere Lithiumionenleitfähigkeiten erzielen, da die

Lithiumionenleitfähigkeit des anorganischen Bestandteils gegenüber derjenigen der polymerbasierten Matrix in der Regel höher ist. Keramische Schlicker bleiben auch bei höheren Füllgraden gießfähig, wenn bei ihrer Formulierung sphärischen Partikeln zum Einsatz kommen. Der nach Trocknung des Lösemittels resultierende Grünkörper weist im Anschluss eine deutliche geringere Porosität auf, was beim finalen Sinterschritt zu einem deutlich geringeren Schrumpf führt. Mit dem Sinterschrumpf häufig verbundene Artefakte (wie z. B. Rissbildung etc.) können auf diese Weise deutlich in ihrer Wirkung reduziert werden.

Im Hinblick auf den Stand der Technik sind daher pulverförmige, lithiumionenleitenden Festelektrolytmaterialien wünschenswert, die aus mikro- oder sub-mikroskaligen Partikeln bestehen, die eine hohe Sphärizität $\Psi$ aufweisen.

Beispielhaft sollen folgende Verfahren angeführt werden:

Glaskugelherstellung: Der Weg, Partikeln aus lithiumionenleitendem Material herzustellen, nutzt den Umstand, dass diese Materialien u. a. auch über die Glaskeramikroute darstellbar sind: Hierzu wird in einem gängigen Schmelzverfahren zunächst ein im Idealfall kristallfreies Grünglas geschmolzen, das im Zuge eines nachgeschalteten Temperschritts keramisiert und dabei in die eigentliche Glaskeramik überführt wird. Das im ersten Prozessschritt hergestellte Glasschmelze kann beim Abkühlen prinzipiell den üblichen für die Herstellung von Glaskugeln angewandten Heißformgebungsprozessen unterworfen werden. Hierfür sind folgende Verfahrensansätze denkbar: In dem in US 3,499,745 offenbarten Verfahren, wird ein geschmolzener Glasstrahl auf ein Schlagrad aufprallen lassen, welches bei Realisierung hinreichend großer Kräfte den Glasstrahl dazu bringt, in Teilstränge, sog. Filamente, aufzubrechen. Diese werden anschließend zunächst durch einen beheizten Bereich, eine Kühlregion und schließlich in eine Sammelzone geschleudert. Infolge der nach der Filamentbildung wirksam werdenden Tendenz zur Minimierung der Oberflächenspannung verrunden diese. Gemäß der EP 1 135 343 B1 wird dabei eine hinreichende Sphärizität erzielt, wenn eine Relaxationszeit T ab dem Zeitpunkt der Filamentbildung verstrichen ist, die durch die Gleichung $T = (d \times \mu) / \delta$ beschrieben werden kann. Dabei handelt es sich bei d um den Durchmesser der gebildeten Kugeln, $\mu$ die Viskosität des Filaments und $\delta$ die Oberflächenspannung des Filaments während der Relaxationszeit. Wie in der US 3,495,961 beschrieben, kann anstelle des Schlagrads auch ein Rotor verwendet werden. Andere bekannte Verfahren zur Herstellung von Glaskugeln umfassen das Aufblasen eines brennenden Gasstroms quer durch einen geschmolzenen Glasstrom, um das Glas in einzelne Teilchen zu zerteilen. Derartige Verfahren sind in der US 3,279,905 offenbart. Alternativ dazu können Glaspartikeln niedrigerer Sphärizität wie in der DD 282 675 A5 beschrieben durch Einbringen in eine Flamme (teilweise) wieder aufgeschmolzen werden und dabei verrunden.

Filamentierung von Salzschmelzen: Analog zur oben beschriebenen Filamentbildung und der anschließenden, infolge von Relaxationseffekten zur Verringerung der Oberflächenenergie auftretenden Bildung von sphärischen Tropfen aus einem aufgeschmolzenen Glasstrahl kann diese entsprechend aus einem aus einer Salzschmelze erzeugten Materialstrahl erfolgen. Technologisch kann hierzu in ähnlicher Weise verfahren werden, wobei zu beachten ist, dass sich die Viskosität eines aufgeschmolzenen Glases sich von derjenigen einer Salzschmelze je nach der im jeweiligen Fall gewählten Temperatur deutlich voneinander unterscheiden kann. Das tropfenförmige Material muss durch Durchleiten durch einen noch heißeren Bereich zunächst in eine präkeramische, häufig poröse, aber abgesehen von einem isotropen Schrumpf formstabile Zwischenstufe überführt und anschließend weiter - entweder noch im selben oder in einem gesonderten zusätzlichen, nachgeschalteten Temperschritt - in den eigentlichen Festkörperlithiumionenleiter überführt werden. Idealerweise werden so dicht gesinterte Kugeln aus dem Festkörperlithiumionenleitermaterial erhalten.

Sprühkalzinierung (unter Verwendung der Pulsationsreaktortechnologie): Bei Verwendung eines Pulsations-reaktors, wie in der DE 10111938 A1, DE 102006027133 A1, DE 102006039462 A1 oder EP 1927394 A1 offenbart, wird eine gasförmige oder eine flüssige Mischung in Form einer Lösung, Suspension oder Dispersion, die alle Komponenten zur Herstellung des lithiumionenleitenden Materials enthält, in einen pulsierenden Heißgasstrom eingebracht - in letzterem Fall durch feines Zerstäuben. Dabei wird der pulsierende Heißgasstrom selbst innerhalb eines Heißgaserzeugers am Reaktor durch die Verbrennung von Erdgas oder Wasserstoff mit Umgebungsluft erzeugt. Je nach Wahl der Lage des Einsprühpunkts herrschen dort Temperaturen zwischen 500 und 1500 °C. Im pulsierenden Heißgasstrom wird ein Zwischenprodukt gebildet, das durch weitere thermische Nachbehandlung im gleichen oder in einem anderen Reaktor in die endgültige Form überführt. In ersterem Fall kann der Reaktor mit einer zusätzlichen Brennstoffzufuhr versehen werden, die entlang des pulsierenden Heißgasstroms dem Einsprühpunkt nachgelagert ist.

Vertropfungsverfahren: Beim Vertropfungsverfahren wird von einer wässrigen oder lösemittelbasierten Salzlösung oder einem Sol als Vorstufe für das lithiumionenleitende Material bzw. von einer nanopartikulären Lösung des lithiumionenleitenden Materials ausgegangen und über eine geeignete Düsenvorrichtung in Tropfen überführt. Die Tropfen werden nach ihrer Bildung wahlweise direkt in

einem geeigneten Prozessgasstrom getrocknet, wie in der US 4043507 oder US 5500162 beschrieben, oder durch Einbringen in ein geeignetes flüssiges Medium, wie in der US 5484559, US 6197073, US 2004/0007789 A1 oder WO 2015/014930 A1 offenbart, zunächst zu weiterer Flokkulation angeregt und anschließend gealtert, gewaschen und getrocknet. Die auf diese Weise dargestellten sphärischen, porösen Grünkörper werden in einem anschließenden Sinterschritt zu einem lithiumionenleitenden Keramikkörper mit hoher Sphärizität verdichtet.

Weiterhin wird die Aufgabe durch ein Verfahren zur Herstellung eines Lithiumionenleiters gelöst, wobei das erfindungsgemäße Verbundmaterial gesintert wird, insbesondere unter Einwirkung von erhöhter Temperatur und/oder erhöhtem Druck.

Sowohl das erfindungsgemäße lithiumionenleitende Verbundmaterial als aus ein aus dem lithiumionenleitenden Verbundmaterial hergestellter Lithiumionenleiter können je nach Anforderungen und Einsatzgebiet als lithiumionenleitendes Bauteil oder Bestandteil eines solchen Bauteils verwendet werden.

Ferner werden Formulierungen zur Herstellung von Kompositvorstufen für Hybridelektrolyten oder keramischen Schlickern für die Herstellung von gesinterten, rein anorganischen Festkörperlithiumionenleiterkomponenten beschrieben, in denen bei gleichen Volumenfüllgraden die Viskosität der partikelgefüllten Formulierung im Fall der Verwendung von nicht-sphärischen Partikeln signifikant höher ist als bei der Verwendung der erfindungsgemäß hergestellten, Partikeln hoher Sphärizität $\Psi$, vorausgesetzt Partikelgröße bzw. Partikelgrößenverteilung sind in beiden Fällen gleich.

Weiterhin werden Formulierungen zur Herstellung von Kompositvorstufen für Hybridelektrolyten oder keramischen Schlickern für die Herstellung von gesinterten, rein anorganischen Festkörperlithiumionenleiterkomponenten beschrieben, in denen sich die entsprechenden Formulierungen ohne wesentliche Änderung der Viskosität im Fall der sphärischen Variante mit deutlich höheren Füllgraden versehen lassen als im Fall der nicht-sphärischen Ausführungsform. Vorausgesetzt ist auch in diesem Fall wieder, dass sich Partikelgröße und Partikelgrößenverteilung in beiden Fällen nicht wesentlich unterscheiden.

Das erfindungsgemäß in Form von sphärischen Partikeln mit einer Größe im μm- oder sub-pm-Bereich hergestellte, lithiumionenleitende Material kann als Füllstoff in einen Polymerelektrolyten bzw. in Polyelektrolyten eingearbeitet werden, wobei der hierbei entstehende Komposit gerne als Hybridelektrolyt bezeichnet wird. Alternativ dazu kann es mit einem geeigneten Werkzeug zu einem Pressling verpresst oder in einen keramischen Schlicker (ohne oder mit Zusatz von einem Binder) eingearbeitet und einem geeigneten Formgebungs-prozess (z. B. Foliengießen) unterzogen und in beiden Fällen unter Temperatur zu einem rein anorganischen, ionenleitenden Formkörper gesintert werden. Beide Darreichungsformen, Hybridelektrolyt und rein anorganischer keramischer Festkörperionenleiter, können als Festkörperelektrolyte in wiederaufladbaren Lithiumionen- oder Lithiumbatterien der nächsten Generation, z. B. in Festkörperlithiumbatterien (all-solid-state batteries (ASSB)) oder Lithium-Luft-Batterien verwendet werden. Einerseits ist dabei der Einsatz als Separator denkbar: Zwischen die Elektroden eingebracht, bewahrt er diese vor einem unerwünschten Kurzschluss und stellt dadurch die Funktionsfähigkeit des Gesamtsystems sicher. Dazu kann der entsprechende Komposit entweder als Schicht auf eine oder beide Elektroden aufgebracht oder als freistehende

Membran als Festkörperelektrolyt in die Batterie integriert werden. Andererseits ist die Compoundierung mit den Elektrodenaktivmaterialien denkbar - im Fall des Hybridelektrolyt durch Einbeziehung des Elektrodenaktivmaterials in die Hybridelektrolytformulierung, im Fall des rein anorganisch keramischen Elektrolyten durch Co-Sintern mit demselben. In diesem Fall bewerkstelligt der Festkörperelektrolyt den Transport der relevanten Ladungsträger (Litihiumionen und Elektronen) zu den Elektrodenmaterialien und zu den Leitelektroden hin bzw. weg - je nachdem ob die Batterie gerade entladen oder geladen wird.

Ausführungsbeispiele:

Beispiele zur Herstellung von lithiumionenleitenden Partikeln hoher Sphärizität $\Psi$ von wenigstens 0,7 aus einem lithiumionenleitenden Material:

1. Herstellung von sphärischen LAGP-Partikeln

(A) Formgebung direkt aus der Grünglasschmelze

Ein Ausgangsglas für eine final lithiumionenleitende, phosphatbasierte Glaskeramik der Zusammensetzung 5,7 Gew.-% $Li_2O$, 6,1 Gew.-% $Al_2O_3$, 37,4 Gew.-% $GeO_2$ und 50,8 Gew.-% $P_2O_5$ wurde in einem Ablauftiegel bei einer Temperatur von 1650 °C erschmolzen.

Die Glasschmelze wurde im gewählten Schmelzaggregat auf einer Temperatur von 1600 °C gehalten. Über eine am Boden des Tiegels angebrachte Düse von einem Durchmesser von 2 mm wurde es ablaufen lassen. Der so erzeugte Glasstrahl wurde auf ein 53-zähniges, 8 mm dickes Schlagrad mit einem Außendurchmesser von 135 mm tropfen lassen, das sich mit einer Frequenz von 5000 U/min um die eigene Achse drehte. Auf diese Weise wurde der Glasstrom in einzelne Teilstränge filamentiert und mit einem Neigungswinkel zwischen 20 bis 30° gemessen gegen die Horizontale beschleunigt. Anschließend wurde er durch einen 3 m langen, mit zwei Gasbrennern auf 1550 °C beheizten, kurvenförmig gebauten Rohrofen geleitet, der die Flugbahn des filamentierten Glasstroms nachzeichnete. Infolge der Neigung zur Minimierung der Oberflächenenergie formten sich die länglich geformten Filamente zu Kugeln um. Nach Austritt aus dem Rohrofen wurden die Glaskugeln durch weiteren Flug an Luft bis zum Erreichen einer ausreichenden Formstabilität abkühlen lassen und schließlich in einem Sammelbehälter aufgefangen.

Die nach dem beschriebenen Heißformgebungsprozess hergestellten, abgekühlten, weitestgehend röntgenamorphen Grünglaskugeln wurden im Zuge einer weiteren Temperaturbehandlung nach einer Keimbildung im Temperaturbereich zwischen 500 und 600 °C für 2 bis 4 Stunden bei einer Maximaltemperatur von 850 °C und Haltezeit von 12 Stunden keramisiert und somit in die finale, lithiumionenleitende Glaskeramik überführt.

(B) Formgebung durch Verrundung von nicht-sphärischen Grünglaspartikeln

Ein Ausgangsglas für eine final lithiumionenleitende, phosphatbasierte Glaskeramik der Zusammensetzung 5,7 Gew.-% $Li_2O$, 6,1 Gew.-% $Al_2O_3$, 37,4 Gew.-% $GeO_2$ und 50,8 Gew.-% $P_2O_5$ wurde in einem Ablauftiegel bei einer Temperatur von 1650 °C erschmolzen.

Die Glasschmelze wurde im gewählten Schmelzaggregat auf einer Temperatur von 1600 °C gehalten. Über eine am Boden des Tiegels angebrachte Düse von einem Durchmesser von 2 mm wurde es ablaufen in einen Spalt zwischen zwei sich gegeneinander drehenden, wassergekühlten Walzen laufen lassen und dabei unter Bildung eines Grünglasbandes abgeschreckt. Das Grünglasband wurde mechanisch mit einem Hammer in kleine Splitter vereinzelt.

Die Glassplitter wurden durch Vormahlung in einer Kugelmühle grobzerkleinert und hiervon die Pulverfraktion mit einer Partikelgröße $d_{100} < 100$ $\mu m$ abgesiebt. Dieses abgesiebte Grünglaspulver wurde in einem weiteren nachgeschalteten Schritt in einer Trockenmahlung auf einer Gegenstrahlmühle auf eine Partikelgröße mit einer Verteilung von $d_{10} = 0,9$ $\mu m$, $d_{50} = 5$ $\mu m$, $d_{90} = 13$ $\mu m$ und $d_{99} = 18$ $\mu m$ weiter zerkleinert.

Durch Einbringen des Pulvers in eine Knallgasflamme werden die Glaspartikeln wieder aufgeschmolzen und erfahren dabei infolge der Tendenz zur Minimierung der Oberflächenenergie eine Verrundung. Nach Austritt aus der Flamme werden die Partikeln abkühlen lassen und in einem Sammelbehälter aufgefangen.

Die nach dem beschriebenen Heißformgebungsprozess hergestellten, abgekühlten, weitestgehend röntgenamorphen Grünglaskugeln wurden im Zuge einer weiteren Temperaturbehandlung nach einer Keimbildung im Temperaturbereich zwischen 500 und 600 °C für 2 bis 4 Stunden bei einer Maximaltemperatur von 850 °C und Haltezeit von 12 Stunden keramisiert und somit in die finale, lithiumionenleitende Glaskeramik überführt.

2. Filamentierung von Salzschmelzen

In einem ersten Schritt wurde wie folgt ein zirkoniumhaltiges Vorstufenpulvers hergestellt: Zu 23,4 kg (50,0 mol) Zirkonium-n-propoxid (70%ige Lösung) werden in einem Rundkolben unter Rühren 5,0 kg (50,0 mol) Acetylaceton zugetropft. Das entstandene Reaktionsgemisch wird 60 min bei Raumtemperatur gerührt. Anschließend wurde zur Hydrolyse 2,7 kg (150,0) mol destilliertes Wasser hinzugegeben. Nach etwa 1 Stunde Reaktionszeit wurde das entstandene Vorhydrolysat am Rotationsverdampfer vollständig getrocknet. Von dem entstandenen Pulver wird anschließend zur Bestimmung des Oxidgehaltes eine Probe ausgeheizt (900 °C / 5 Stunden).

1,77 kg (5,0 mol) $ZrO_2$-Äquivalent von dem im vorangegangenen Schritt hergestellten zirkoniumhaltigen Vorstufenpulver (Oxidgehalt: 35 Gew.-%) wurden gemeinsam mit 2,5 kg (7,5 mol) Lanthanacetat-Sesquihydrat, 1,95 kg (19,2 mol) Lithiumacetat-Dihydrat und 0,15 kg (0,61 mol) Aluminiumchlorid-Hexahydrat in eine Kugelmühle gegeben und dort zur Herstellung einer möglichst homogenen Pulvermischung für 4 h gemahlen. Als Mahlkugeln wurden hierzu $Al_2O_3$-Kugeln mit einem Durchmesser von 40 mm verwendet.

Nach dem Absieben wurde die Pulvermischung in einen $Al_2O_3$-Ablauftiegel gegeben und dort auf eine Temperatur von 300 °C gebracht, knapp oberhalb des Schmelzpunkts von wasserfreiem Lithiumacetat, der bei 280 - 285 °C liegt.

Dabei bildet sich eine Salzschmelze aus, die über eine am Boden des Tiegels angebrachte Düse von einem Durchmesser von 2 mm wurde ablaufen lassen wurde. Der so erzeugte aus der Salzschmelze bestehende Strahl wurde auf ein 53-zähniges, 8 mm dickes Schlagrad mit einem Außendurchmesser von 135 mm tropfen lassen, das sich mit einer Frequenz von 5000 U/min um die eigene Achse drehte. Auf diese Weise wurde der aus der Salzschmelze bestehende Strahl in einzelne Teilstränge filamentiert und mit einem Neigungswinkel zwischen 20 bis 30° gemessen gegen die Horizontale beschleunigt. Anschließend wurde er durch einen 3 m langen, kurvenförmig gebauten Rohrofen geleitet, der die Flugbahn des filamentierten aus der Salzschmelze bestehenden Strahls nachzeichnete. Der Ofen wurde dergestalt elektrisch beheizt, dass er in der Eintrittszone auf moderaten Temperaturen von 300 - 320 °C gehalten wurde, so dass die Salzschmelze weiter erhalten blieb und sich die zunächst noch länglich geformten Filamente infolge der Neigung zur Minimierung der Oberflächenenergie zu noch flüssigen Kugeln umformten. In den nachgeschalteten Zonen wurde die Temperatur dann deutlich höher gewählt - Temperaturen von rund 900 °C wurden hier erreicht. Infolgedessen trat hier ein erster Schritt zur Calcinierung der flüssigen Kugeln ein, wobei sich poröse, präkeramische Partikeln als Zwischenstufe ausbildeten. Nach Austritt aus dem Rohrofen wurden diese durch weiteren Flug an Luft abkühlen lassen und schließlich in einem Sammelbehälter aufgefangen.

Die porösen, präkeramischen Partikeln wurden einem weiteren Calcinierungsschritt in einem Ofen bei 1050 °C und einer Haltezeit von 7 - 8 h zu den finalen, aus dem lithiumionenleitenden LLZO-Material bestehenden Kugeln verdichtet.

3. Herstellung von sphärischen LLZO-Partikeln über die Sprühkalzinierung unter Verwendung der Pulsationsreaktormethode

2,3 kg (4,7 mol) Zirkoniumacetylacetonat wurden in mindestens 10,0 kg (556 mol) destilliertem Wasser in einem geeigneten Reaktionsgefäß gelöst. 2,4 kg (7 mol) Lanthanacetat-Sesquihydrat wurden in einem weiteren Reaktionsgefäß in 10 kg (556 mol) destilliertem Wasser gelöst. 1,8 kg (18 mol) Lithiumacetat-Dihydrat und 0,14 kg (0,58 mol) Aluminiumchlorid-Hexahydrat wurden in einem dritten Reaktionsgefäß in 5,0 kg (278 mol) destilliertem Wasser gelöst. Nach vollständiger Lösung der Komponenten wurden die Lösungen zusammengegeben und das entstandene Reaktionsgemisch 12 Stunden bei Raumtemperatur gerührt.

Die Lösung wird mit Hilfe einer Schlauchpumpe in einen Pulsationsreaktor mit einem Volumenstrom von 3 kg/h gefördert und dort über eine 1,8 mm Titandüse in das Reaktorinnere fein zerstäubt und dort thermisch behandelt.

Die Temperatur der Brennkammer wird dabei auf 1030 °C, diejenige des Resonanzrohrs auf 1136 °C gehalten. Das Verhältnis der Verbrennungsluftmenge zur Brennstoffmenge (Erdgas) beträgt 10 : 1 (Luft: Gas).

Das Pulver wird in einen quaderförmigen Korundtiegel gefüllt und in einen Kammerofen gestellt. Das Glühgut wird im Ofen in Luftatmosphäre zur vollständigen Verdichtung der aus dem LLZO bestehenden, sphärischen mikroskaligen Partikeln auf eine Temperatur von 1050 °C gebracht.

4. Herstellung von sphärischen LLZO-Partikeln über das Vertropfungsverfahren

Zunächst wurde das LLZO-Material in einem sogenannten Skull-Tiegel erschmolzen, wie etwa in der DE 199 39 782 C1 beschrieben. Hierzu wurde ein wassergekühlter Tiegel verwendet, in dem sich während der Schmelze eine kühlere Schutzschicht aus dem zu schmelzenden Material bildet. Demzufolge wird während des Schmelzvorgangs kein Tiegelmaterial aufgelöst. Der Energieeintrag in die Schmelze wird mittels einer Hochfrequenzeinkopplung über die umgebende Induktionsspule in das schmelzflüssige Material realisiert. Eine Bedingung dabei ist die ausreichende Leitfähigkeit der Schmelze, die im Fall von Lithium-Granat-Schmelzen durch den hohen Lithiumgehalt gegeben ist. Während des Einschmelzvorgangs tritt eine Lithiumverdampfung auf, was leicht durch einen Lithiumüberschuss korrigiert werden kann. Dazu wird im Regelfall mit einem 1,1- bis 2-fachen Lithium-Überschuss gearbeitet.

Die Rohstoffe wurden entsprechend folgender Zusammensetzung gemischt und in den nach oben offenen Skull-Tiegel gefüllt: 14,65 Gew.-% $Li_2O$, 56,37 Gew.-% $La_2O_3$, 21,32 Gew.-% $ZrO_2$ und 7,66 Gew.-% $Nb_2O_5$. Das Gemenge musste zunächst vorgeheizt werden, um eine gewisse Mindestleitfähigkeit zu erreichen. Hierzu wurde eine Brennerbeheizung verwendet. Nach Erreichen der Kopplungstemperatur wurde das weitere Aufheizen und Homogenisieren der Schmelze durch Hochfrequenzeinkopplung über die Induktionsspule erreicht. Um die Homogenisierung der Schmelzen zu verbessern, wurde mit einem wassergekühlten Rührer gerührt.

Das auf diesem Wege hergestellte Material kann grundsätzlich entweder durch direktes Erstarren aus der Schmelze oder durch Abschrecken, gefolgt von einer Temperaturbehandlung (Keramisierung) in ein glaskeramisches Material mit granatartiger Hauptkristallphase überführt werden. Im hier beschriebenen Beispiel wurde die Variante durch direktes Abschrecken gewählt.

Das Material fiel in diesem Fall als monolithischer Block an, der über diverse Grobzerkleinerungsprozesse - wie Bearbeitung mit Hammer und Meißel im ersten Schritt, Zerkleinerung der hierbei erhältlichen Bruchstücke im Backenbrecher im zweiten Schritt und weitere Vormahlung des dabei anfallenden Grobpulvers in der Planetenmühle und anschließender Siebung im dritten Schritt - in ein Pulver mit einer Partikelgröße $d_{100} < 100 \ \mu m$ überführt wurde. Dieses Pulver wurde in einem weiteren nachgeschalteten Schritt in einer Mahlung in Wasser, die in einem Attritor durchgeführt wurde auf eine Partikelgröße mit einer Verteilung von $d_{10} = 0,14 \ \mu m$, $d_{50} = 0,42 \ \mu m$, $d_{90} = 1,87 \ \mu m$ und $d_{99} = 2,92 \ \mu m$ weiter zerkleinert. Der Feststoffgehalt an LLZO in dem dabei eingesetzten Mahlschlicker betrug rund 30%. Zur Stabilisierung der Partikeln wurde dieser vor der Mahlung von einem Dispergiermittel (Dolapix CE 64 bzw. Dolapix A88 der Firma Zschimmer & Schwarz GmbH & Co KG), wobei sich ein Anteil von 1,0% bezogen auf den LLZO-Anteil in der Suspension als gut gangbar erwies.

Zur weiteren Verarbeitung wurde der Feststoffgehalt des Mahlschlickers durch teilweises Verdampfen des Wassers am Rotationsverdampfer auf einen Gehalt von 60% erhöht, um ein geeignetes Mischungsverhältnis bezüglich der Viskosität zu erhalten.

Anschließend wurde Ammoniumalginat als Binder in einer Menge von 1,0% gegeben.

Aus dem Schlicker wurden mittels eines Vertropfungsverfahrens über Düsen und/oder Kanülen formstabil Grünkörper der Größen 0,3 bis 2,5 mm durch Eintauchen sowie Reaktion in einer Aluminiumlaktat- oder eine anorganische Säure- oder eine organische Säurelösung erhalten.

Diese wurden im Anschluss zu gesinterten Kugeln durch ein Sinterverfahren geformt. Die Sinterung erfolgte an Luftatmosphäre unter Normaldruck bei Temperaturen von 1150 °C.

Beispiele zur Herstellung von Formulierungen für lithiumionenleitende Verbundmaterialien gefüllt mit wenigstens 20 Vol.-% lithiumionenleitenden Partikeln hoher Sphärizität Ψ von wenigstens 0,7 aus einem lithiumionenleitenden Material bei einem Polydispersitätsindex PI der Partikelgrößenverteilung von < 0,7, oder wenigstens 30 Vol.-% entsprechender Partikel bei einem Polydispersitätsindex PI der Partikelgrößenverteilung von 0,7 < PI < 1,2 oder wenigstens 40 Vol-% entsprechender Partikel bei einem Polydispersitätsindex PI der Partikelgrößenverteilung von > 1,2:

1. Herstellung eines erfindungsgemäßen Verbundmaterials (Herstellung einer Hybridelektrolytmembran basierend auf einem mit LLZO-Partikeln gefüllten Polyethylenoxid (PEO)/ Lithiumbis(trifluoromethanesulfonyl)imid (LiTSFI)-Polymerelektrolyten)

1,4 g Polyethylenoxid (PEO, Dow Chemical) mit einem Molgewicht von $4 \times 10^6$ g/mol wurden im Vakuum für 48 h bei 50 °C getrocknet. Zu dem Polymer wurden unter Trockenraumbedingungen (Taupunkt < -70 °C) 8,5 g Lithiumlanthanzirkoniumoxid-Pulver gegeben, das aus Partikeln mit einer Sphärizität von 0,92 bestand und dessen Partikelgrößenverteilung folgende Werte aufwies: $d_{10} = 1,22 \ \mu m$, $d_{50} = 2,77 \ \mu m$, $d_{90} = 5,85 \ \mu m$ $d_{99} = 9,01 \ \mu m$. Entsprechend beträgt der Polydispersitätsindex der Partikelgrößenverteilung erfindungsgemäß PI = 0,681. Die Mischung wurde intensiv im Mörser aufgemahlen. Anschließend wurden hierzu 0,6 g Lithiumbis(trifluoromethanesulfonyl)imid (LiTFSI, 3M) mit

einer Reinheit von > 99% (für Batterieanwendungen geeignet) zugemischt, das zuvor für 24 h bei 120 °C im Vakuum ($10^{-7}$ bar) getrocknet worden war. Alle Komponenten wurden weiter im Mörser intensiv gemischt, wobei sich schließlich eine homogene Paste bildete. Damit resultierte ein PEO/LiTSFI-Polymerelektrolytmatrix mit einem Verhältnis Lithiumionen :

Ethylenoxidmonomereinheiten

(Li : EO) von 1 : 15, in die der anorganische Festkörperlithiumionenleiter in einem Volumenanteil von 50 Vol.-% eingebettet war. Der so hergestellte Hybridelektrolyt wurde nach Vakuumeinschweißen in einen Pouchbeutel über Nacht bei 100 °C wärmebehandelt und anschließend bei 100 °C mit einer Auflagekraft von 50 kN (50 - 750 kg/cm$^2$) heiß verpresst (Servitec Polystat 200 T-Presse). Es resultierte eine Kompositmembran mit einer Dicke von rund 100 $\mu m$.

Nach derselben Prozedur wurden Hybridelektrolytmembranen unter Verwendung eines aus nicht-sphärischen Partikeln (Ψ= 0,48) bestehenden LLZO-Pulvers hergestellt, das eine Partikelgrößenverteilung mit folgenden Werten aufwies: $d_{10} = 0,44 \ \mu m$, $d_{50} = 1,24 \ \mu m$, $d_{90} = 3,50 \ \mu m$ $d_{99} = 6,94 \ \mu m$. Der Polydispersitätsindex der

Partikelgrößenverteilung betrug in diesem Fall erfindungsgemäß PI = 0,900. In diesen Fällen waren allerdings nur 4,6 g LLZO-Pulver in die PEO/LiTSFI-Polymerelektrolytmatrix praktikabel einarbeitbar, d. h. der Hybridelektrolyt ließ sich in diesen Fällen nur mit einem Volumengehalt von max. 29 Vol.-% herstellen.

2. Herstellung eines erfindungsgemäßen Litiumionenleiters aus dem

3. erfindungsgemäßen Verbundmaterials (Herstellung einer rein anorganischen, gesinterten Festkörperelektrolytmembran mit Hilfe eines Foliengießprozesses basierend auf einem mit LATP-Partikeln gefüllten Gießschlicker)

11,4 g Polyvinylbutyral (PVB) mit einem Molgewicht von 35.000 g/mol, das neben den Vinylbutyraleinheiten 1,7 Gew.-% Vinylacetat und 18,9 Gew.-% Vinylalkoholeinheiten enthielt, wurden in 68,4 g eines Lösemittelgemischs bestehend aus Ethanol: Toluol (4 : 6) gelöst. Die Viskosität der Lösung betrug zwischen 200 und 450 mPa s. Zu der Mischung wurden 5,7 g Dioctylphtalat gegeben, das als Weichmacher fungierte. In die Mischung wurden schließlich unter Verwendung eines Dissolvers 200 g eines Lithiumaluminiumtitanphosphats (LATP)-Glaskeramikpulvers eindispergiert, das aus Partikeln mit einer Sphärizität von 0,94 bestand und dessen Partikelgrößenverteilung folgende Werte aufwies: $d_{10}$ = 0,81 $\mu$m, $d_{50}$ = 2,23 $\mu$m, $d_{90}$ = 5,17 $\mu$m $d_{99}$ = 8,46 $\mu$m. Erfindungsgemäß betrug der Polydispersitätsindex der Partikelgrößenverteilung in diesem Fall PI = 0,805. Die resultierende Gießmasse wies eine Viskosität von 4000 - 5000 mPa s auf. Der Gehalt an Glaskeramikpulver lag bei rund 43 Vol.-%.

Die so entstandene, homogenisierte Masse wurde nachfolgend durch Vakuumtechnologie von Gasblasen befreit (= entlüftet). Dieses entlüftete Material wurde dem üblichen Foliengießprozess mit auf einem Filmziehgerät zugeführt und auf diese Weise auf eine rund 0,3 mm starke Folie (gemessen nach Trocknung) vergossen. Die auf diese Weise erzeugte Grünfolie wurde danach auf das gewünschte Format geschnitten und dadurch vereinzelt.

Die vereinzelten Folienstücke wurden schließlich bei 1000 °C für 4 h zu dichten LATP-Membranen versintert. Die Schwindung der Folie betrug dabei rund 9%.

Nach derselben Prozedur wurde eine rein anorganische Festkörperlithiumionenleitermembran unter Verwendung eines aus nicht-sphärischen Partikeln ($\Psi$ = 0,46) bestehenden LATP-Pulvers hergestellt, das eine Partikelgrößenverteilung mit folgenden Werten aufwies: $d_{10}$ = 0,68 $\mu$m, $d_{50}$ = 1,74 $\mu$m, $d_{90}$ = 3,86 $\mu$m $d_{99}$ = 7,21 $\mu$m. Der Polydispersitätsindex der Partikelgrößenverteilung betrug hier erfindungsmäß PI = 0,754. In diesen Fällen waren allerdings nur 90 g LATP-Pulver in die aus PVB, Dioctylphtalat und Ethanol : Toluol bestehende Binderlösung praktikabel einarbeitbar, d. h. der Foliengießschlicker ließ sich in diesen Fällen nur mit einem Volumengehalt von max. 28 Vol.-% herstellen, ohne dass die Zielviskosität von 4000 - 5000 mPa s signifikant überstiegen wurde. Wegen des deutlich reduzierten Feststoffgehalts lag der Schrumpf beim Sintern bei rund 15%.

## Patentansprüche

1. Lithiumionenleitendes Verbundmaterial, umfassend wenigstens ein Polymer und lithiumionenleitende Partikel, wobei die Partikel eine Sphärizität $\Psi$ berechnet wie in der Beschreibung von wenigstens 0,7 aufweisen und das Verbundmaterial wenigstens 20 Vol.-% der Partikel bei einem Polydispersitätsindex PI berechnet wie in der Beschreibung der Partikelgrößenverteilung von < 0,7 enthält, oder das Verbundmaterial wenigstens 30 Vol.-% der Partikel bei einem Polydispersitätsindex PI der Partikelgrößenverteilung im Bereich von 0,7 bis < 1,2 enthält, oder das Verbundmaterial wenigstens 40 Vol-% der Partikel bei einem Polydispersitätsindex PI der Partikelgrößenverteilung von > 1,2 enthält, **dadurch gekennzeichnet, dass**

    das Polymer folgende Verbindungen umfasst:

   - Polyethylenoxid,
   - Derivate von Polyethylenoxid,
   - Polyvinylbutyral

    und die Partikel aus wenigstens einer der nachfolgenden lithiumionenleitenden Verbindung bestehen:

   - Lithiumlanthanzirkonat (LLZO),
   - Lithiumaluminiumtitanphosphat (LATP)

2. Lithiumionenleitendes Verbundmaterial nach Anspruch 1,
   **dadurch gekennzeichnet, dass**
   das Polymer wenigstens eine lithiumionenleitende Verbindung enthält, insbesondere Lithiumbistrifluoromethanesulfonimidat als lithiumionenleitende Verbindung.

**EP 3 499 630 B1**

3. Lithiumionenleitendes Verbundmaterial nach einem der vorhergehenden Ansprüche,
**dadurch gekennzeichnet, dass**
die Partikel einen mittleren Partikeldurchmesser von 0,02 μm bis 100 μm, bevorzugt 0,2 μm bis 2 μm und/oder 5 μm bis 70 μm aufweisen.

4. Verfahren zur Herstellung eines Lithiumionenleiters
**dadurch gekennzeichnet, dass**
das Verbundmaterial nach einem der vorhergehenden Ansprüche gesintert wird, insbesondere unter Einwirkung von erhöhter Temperatur und/oder erhöhtem Druck.

**Claims**

1. Lithium ion-conducting composite material, comprising at least one polymer and lithium ion-conducting particles, wherein the particles have a sphericity ψ calculated as in the description of at least 0.7 and the composite material contains at least 20% by volume of the particles at a polydispersity index PI calculated as in the description of the particle size distribution of <0.7, or the composite material contains at least 30% by volume of the particles at a polydispersity index PI of the particle size distribution in the range of 0.7 to <1.2, or the composite material contains at least 40% by volume of the particles at a polydispersity index PI of the particle size distribution of >1.2, **characterized in that**

   the polymer comprises the following compounds:

   - polyethylene oxide,
   - derivatives of polyethylene oxide,
   - polyvinyl butyral

   and the particles consist of at least one of the following lithium ion-conducting compounds:

   - lithium lanthanum zirconate (LLZO),
   - lithium aluminum titanium phosphate (LATP)

2. Lithium ion-conducting composite material according to claim 1,
**characterized in that**
the polymer contains at least one lithium ion-conducting compound, in particular lithium bistrifluoromethanesulfonimidate as lithium ion-conducting compound.

3. Lithium ion-conducting composite material according to one of the preceding claims,
**characterized in that**
the particles have an average particle diameter of 0.02 μm to 100 μm, preferably 0.2 μm to 2 μm and/or 5 μm to 70 μm.

4. Method for producing a lithium ion conductor,
**characterized in that**
the composite material is sintered according to one of the preceding claims, in particular under the action of elevated temperature and/or elevated pressure.

**Revendications**

1. Matériau composite conducteur d'ions lithium, comprenant au moins un polymère et des particules conductrices d'ions lithium, les particules présentant une sphéricité ψ calculée comme dans la description d'au moins 0,7 et le matériau composite contenant au moins 20 % en volume des particules à un indice de polydispersité PI calculé comme dans la description de la distribution granulométrique de < 0,7, ou le matériau composite contenant au moins 30 % en volume des particules à un indice de polydispersité PI de la distribution granulométrique dans la plage de 0,7 à < 1,2, ou le matériau composite contenant au moins 40 % en volume des particules à un indice de polydispersité PI de la distribution granulométrique de > 1,2,
**caractérisé en ce que**

14

le polymère comprend les composés suivants :

- oxyde de polyéthylène,
- dérivés de l'oxyde de polyéthylène,
- polyvinylbutyral

et les particules sont constituées d'au moins un des composés conducteurs d'ions lithium suivants :

- oxyde de lithium, lanthane et zirconium (LLZO),
- phosphate de lithium, d'aluminium et de titane (LATP).

2. Matériau composite conducteur d'ions lithium selon la revendication 1,
**caractérisé en ce que**
le polymère contient au moins un composé conducteur d'ions lithium, en particulier du bistrifluorométhanesulfonimidate de lithium comme composé conducteur d'ions lithium.

3. Matériau composite conducteur d'ions lithium selon l'une des revendications précédentes,
**caractérisé en ce que**
les particules présentent un diamètre moyen de particule de 0,02 $\mu$m à 100 $\mu$m, de préférence de 0,2 $\mu$m à 2 $\mu$m et/ou de 5 $\mu$m à 70 $\mu$m.

4. Procédé de fabrication d'un conducteur d'ions lithium,
**caractérisé en ce que**
le matériau composite selon l'une des revendications précédentes est fritté, en particulier sous l'effet d'une température élevée et/ou d'une pression élevée.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20050107239 A1
- US 2009159839 A
- JP 2008120666 A
- US 2009011339 A
- US 20030205467 A1
- US 6030909 A
- US 6485622 B
- JP 2008047412 A
- US 20140057162 A1
- DE 102007030604 A1
- US 2010047696 A1
- US 20100203383 A1
- DE 102013101145 A1
- DE 102013224045 A1
- US 20110053001 A1
- DE 102014116378 A1
- JP 3062203 B
- US 6475678 B1

- US 2017005367 A1
- US 3499745 A
- EP 1135343 B1
- US 3495961 A
- US 3279905 A
- DD 282675 A5
- DE 10111938 A1
- DE 102006027133 A1
- DE 102006039462 A1
- EP 1927394 A1
- US 4043507 A
- US 5500162 A
- US 5484559 A
- US 6197073 B
- US 20040007789 A1
- WO 2015014930 A1
- DE 19939782 C1

**In der Beschreibung aufgeführte Nicht-Patentliteratur**

- **A. HAYASHI et al.** *Journal of Non-Crystalline Solids,* 2009, vol. 355, 1919-1923
- **Y. SEINO et al.** *Solid State Ionics,* 2006, vol. 177, 2601-2603
- **XU et al.** *Electrochem. Commun.,* 2004, vol. 6, 1233-1237

- *Materials Letters,* 2004, vol. 58, 3428-3431
- **K. NAGAMINE et al.** *Solid State Ionics,* 2008, vol. 179, 508-515
- **Y. SHIMONISHI et al.** *Solid State Ionics,* 2011, vol. 183, 48-53